(19) Europäisches Patentamt
European Patent Office
Office européen des brevets

(11) **EP 4 012 450 B1**

(12) **EUROPEAN PATENT SPECIFICATION**

(45) Date of publication and mention
of the grant of the patent:
**14.05.2025 Bulletin 2025/20**

(21) Application number: **20913061.6**

(22) Date of filing: **15.10.2020**

(51) International Patent Classification (IPC):
*G01S 13/88* (2006.01)    *G01V 3/12* (2006.01)
*G01S 7/41* (2006.01)    *G01S 7/04* (2006.01)
*G01S 13/74* (2006.01)    *G01S 13/04* (2006.01)
*H01Q 3/36* (2006.01)    *H01Q 21/06* (2006.01)
*G01S 13/75* (2006.01)    *G01S 13/02* (2006.01)

(52) Cooperative Patent Classification (CPC):
**G01V 3/12; G01S 7/04; G01S 7/411; G01S 13/04;
G01S 13/75; G01S 13/887;** G01S 2013/0245

(86) International application number:
**PCT/CN2020/121118**

(87) International publication number:
**WO 2022/077328 (21.04.2022 Gazette 2022/16)**

(54) **SCANNING-TYPE NON-LINEAR NODE DETECTION METHOD AND APPARATUS**

SCANVERFAHREN UND -VORRICHTUNG ZUR DETEKTION EINES NICHTLINEAREN KNOTENS

PROCÉDÉ ET APPAREIL DE DÉTECTION DE NŒUD NON LINÉAIRE DE TYPE À BALAYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.06.2022 Bulletin 2022/24**

(73) Proprietor: **Shenzhen AWP Technology Co., Ltd.
Shenzhen, Guangdong 518133 (CN)**

(72) Inventor: **BIE, Tijun
Shenzhen, Guangdong 518000 (CN)**

(74) Representative: **Kurig, Thomas
Becker Kurig & Partner
Patentanwälte mbB
Bavariastraße 7
80336 München (DE)**

(56) References cited:
CA-A1- 3 071 582          CN-A- 106 533 486
CN-A- 106 778 549        CN-A- 110 045 429
DE-A1- 102018 128 962    GB-A- 2 344 423
GB-A- 2 505 173          GB-A- 2 510 636
US-A1- 2018 356 506

## Description

### Field of invention

The present invention belongs to the technical field of nonlinear junction detection, and particularly relates to a scanning nonlinear junction detection method and device.

### Background art of the invention

A nonlinear junction includes a semiconductor junction and a metal-metal oxide junction. Such junction has a characteristic that a relationship between voltage and current is nonlinear, so when an input signal is a high-frequency sinusoidal signal, a harmonic signal of the input signal may be generated at the nonlinear junction. A nonlinear junction detector detects apparatus containing semiconductor junctions and metal-to-metal oxide junctions by means of harmonic properties of the nonlinear junction detector, and is usually used to search for detectaphone, camera and other hidden electronic apparatus.

An existing nonlinear junction detector includes a transmission unit (TX) and a reception unit (RX). A detection signal is transmitted by an antenna, if a nonlinear junction is present within a coverage range of the antenna, a harmonic signal is generated and is received by the RX unit, according to a signal intensity of the received harmonic signal, it is indicated whether a nonlinear junction is present in a region under detection. This method is used to search for hidden electronic products (eavesdropping devices in general).

When used in practice, the existing nonlinear junction detector needs to search for the region under detection by scanning back and forth to find hidden nonlinear junctions. For a region with a large area, scanning search takes more time, and has a risk of missing scanning.

DE102018128962A1 disclosed a method for determining the position of an object, comprising Device for determining the position of an object and system, comprises at least one non-linear component, in particular one semiconductor component, which, when irradiated with high-frequency transmitted signals from at least two different positions, produces and emits object signals having twice and/or three times the frequency of the respective transmitted signals.

GB2344423A disclosed a non-linear junctions detector using re-radiated electromagnetic waves, comprises an antenna for transmitting electromagnetic waves at a base frequency and receiving waves, re-radiated by a non-linear junction, such as a semiconductor within an eavesdropping device, at harmonic frequencies. The antenna may transmit and receive circularly polarised signals. The amplitude of the second and third harmonic signals, may be compared to allow discrimination between different types of non-linear junction.

US20180356506A1 disclosed a system and method to perform two-stage beamforming in a radar system, includes obtaining an incoming signal vector x associated with a detected target. The method also includes performing coarse beamforming with a first set of k1 azimuthal angle $\theta i$ and elevation angle $\varphi i$ combinations associated with each element of the vector, and selecting a selected area in an azimuth-elevation plane around a subset of the k1 azimuthal angle $\theta i$ and elevation angle $\varphi i$ combinations for each element of the vector. Fine beamforming is performed in the selected area with a second set of k2 azimuthal angle $\theta i$ and elevation angle $\varphi i$ combinations associated with each element of the vector. The second set of k2 azimuthal angle $\theta i$ and elevation angle $\varphi i$ combinations is more closely spaced in the azimuth-elevation plane than the first set of k1 azimuthal angle $\theta i$ and elevation angle $\varphi i$ combinations.

CA3071582A1 disclosed methods and systems for detecting electronics amongst a plurality of recycling materials. Comprising a battery detection facility comprising a non-linear junction detector and a detection antenna system, wherein the battery detection facility is adapted to detect, through interrogation of an RF signal, a battery comprising an electronic circuit amongst a plurality of recycling materials, wherein the detection antenna system emits the RF signal and detects the battery when the detection antenna system receives a returned detected RF signal that is a harmonic of the RF signal as emitted by the electronic circuit in the battery. CN106778549A1 disclosed a multi-dimensional information fusion-based harmonic detection object detection algorithm and apparatus. Multi-dimensional information is acquired, and joint determining is based on different dimensions, so that object resolution in harmonic detection is improved, the probability of false alarm is lowered, the anti-interference capability is improved, and harmonic detection is more practical and feasible. According to the method, whether a target exists is determined according to whether threshold total energy of each channel is zero; if yes, the target exists, regular objects (like metal shell electronic equipment) dominated by irregular multi-metal knot objects (including keys) and metal knot features, and regular objects dominated by semi-conductor knot features are detected according to a quantity of secondary harmonic thresholds, a total energy value of secondary harmonic thresholds, a quantity of third harmonic thresholds, a total energy value of third harmonic thresholds, contribution of the secondary harmonic energy to total harmonic energy, and a relationship between a secondary harmonic peak coefficient and a third harmonic peak coefficient; and if not, it is determined that no detection target exists, and a result indicating that no detection target exists is output.

## Disclosure of the invention

To solve the problem and defect existing in the prior art, a purpose of the present invention is to provide a scanning nonlinear junction detection method and device which can quickly point out a region and position in which a nonlinear junction is located in a detection region.

To achieve the above purpose, the present invention provides a scanning nonlinear junction detection method, used to detect electronic apparatus containing nonlinear junctions, comprising following steps:

S1. dividing a detection region into multiple sub-regions, transmitting, by a transmission unit comprising an antenna array, signals to all the sub-regions one by one;

S2. receiving, by a reception unit, signals fed back from the sub-regions, obtaining amplitude of harmonic components measured from all the sub-regions according to the signals fed back; if one of the harmonic components of a certain sub-region exceeds a preset value, determining that a nonlinear junction is present in the sub-region.

Further, in step S1, the sub-regions are arranged in $m$ rows and $n$ columns, where $m>1$, $n>1$.

Further, an effective space angle of the transmission unit includes a horizontal angle $\theta$, a pitch angle $\varphi$. A space angle coordinate range of the detection region is $(-0.5n*\theta$ to $0.5n*\theta, -0.5m*\varphi$ to $0.5m*\varphi)$.

Further, a space angle coordinate range of each of the sub-regions is $[a*\theta$ to $(a+1)*\theta, (b+1)*\varphi$ to $b*\varphi]$, where $-0.5n \leq a \leq 0.5n-1$, $-m/2 \leq b \leq 0.5m-1$.

Further, in step S1, the transmission unit is an antenna array including multiple transmission antennas, wherein relationships between electrical signal phases of the transmission antennas are controlled to change a beam angle of the transmission unit, so the transmission unit scans the sub-regions one by one.

Further, the transmission antennas are arranged in multiple rows and multiple columns.

Further, a main lobe direction when the transmission unit scans each of the sub-regions directs to a center point of each of the sub-regions.

According to the invention, - the method further comprises step S3: setting the sub-region in which the nonlinear junction is located as a new detection region, and repeating steps S1 and S2, until a precise position of the nonlinear junction is found.

The present invention also provides a scanning nonlinear junction detection device according to claim 8.

Further, the transmission unit comprises multiple transmission antennas which are arranged in multiple rows and multiple columns.

Compared with the prior art, the present invention has following advantageous effects: a detection region is divided into multiple sub-regions, each sub-region is scanned by a transmission unit, if amplitude of a harmonic component of a signal fed back from a certain sub-region exceeds a preset value, it is determined that a nonlinear junction is present in the sub-region, so an occurrence of missing scanning is avoided, an accurate position and region in which the nonlinear junction is located are quickly found, and speed and efficiency of searching for the nonlinear junction are improved.

## Description of the drawings

Fig. 1 is a working schematic diagram 1 of embodiment 2 of the present invention;
Fig. 2 is a method step diagram of embodiment 1 of the present invention;
Fig. 3 is a working schematic diagram 2 of embodiment 1 of the present invention;
Fig. 4 is a working schematic diagram 3 of embodiment 1 of the present invention;
Fig. 5 is a structural diagram showing main lobe directions of an antenna array in embodiment 1 of the present invention;
Fig. 6 is an antenna array arrangement diagram 1 of embodiment 1 of the present invention;
Fig. 7 is an antenna array arrangement diagram 2 of embodiment 1 of the present invention;
Fig. 8 is a frame connection diagram of embodiment 2 of the present invention;
Fig. 9 is a circuit connection diagram 1 of embodiment 2 of the present invention;
Fig. 10 is a circuit connection diagram 2 of embodiment 2 of the present invention.

## Detailed description of the invention

To make the purpose, the technical solution and the advantages of the present invention more clear, the present invention will be further described below in detail in combination with the drawings and the embodiments. It should be understood that the specific embodiments described herein are only used for explaining the present invention, not used for limiting the present invention.

Embodiment 1:

Embodiment 1 of the present invention provides a scanning nonlinear junction detection method, used to detect electronic apparatus containing nonlinear junctions, comprising following steps:

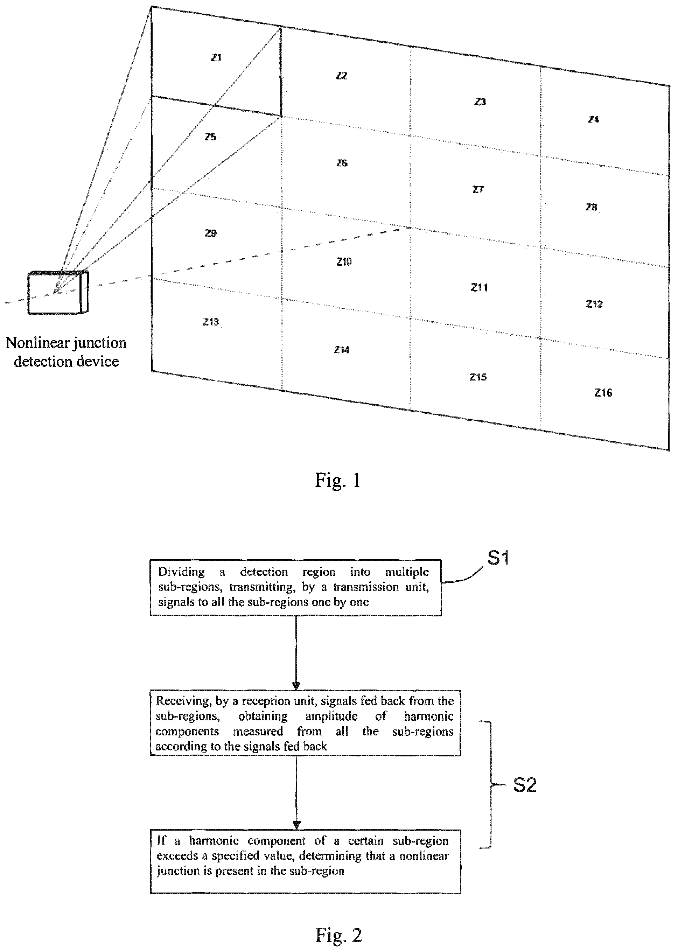

S1. as shown in Fig. 1, dividing a detection region into multiple sub-regions, transmitting, by a transmission unit, signals to all the sub-regions one by *one;*

S2. receiving, by a reception unit, signals fed back from the sub-regions, obtaining amplitude of harmonic components measured from all the sub-regions according to the signals fed back; if one of the harmonic components of a certain sub-region exceeds a preset value, determining that a nonlinear junction is present in the sub-region.

By means of the method, a detection region is divided into multiple sub-regions, each sub-region is scanned by a transmission unit, if amplitude of a harmonic component of a signal fed back from a certain sub-region exceeds a preset value, it is determined that a nonlinear junction is present in the sub-region, in this way, a detection region of a nonlinear junction is greatly reduced, an occurrence of missing scanning is avoided, a position and region in which the nonlinear junction is located are quickly found, and speed and efficiency of searching for the nonlinear junction are improved.

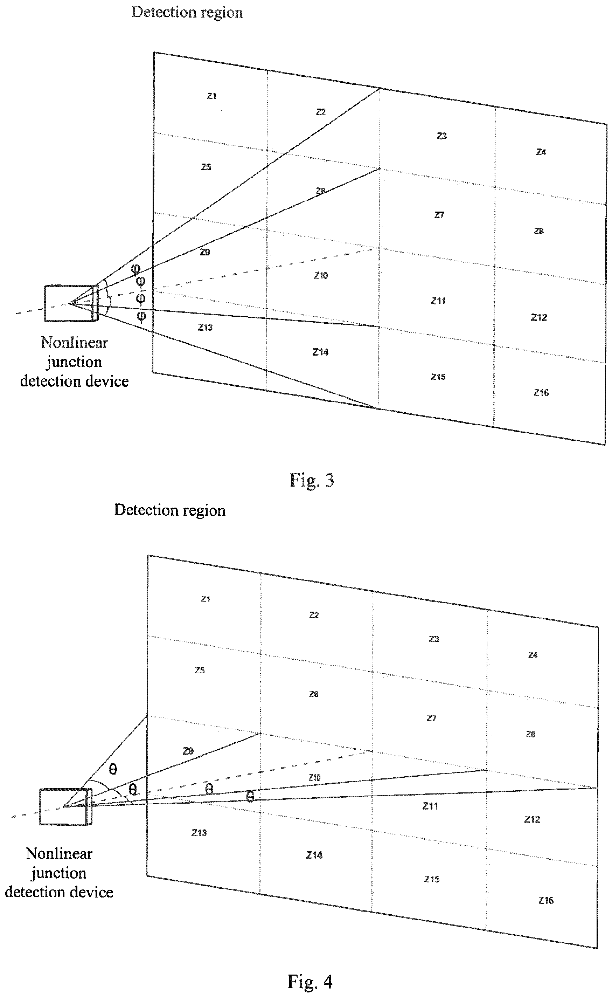

In step S1, the sub-regions are arranged in $m$ rows and $n$ columns, where $m>1, n>1$. As shown in Fig. 3 and Fig. 4, an effective space angle of the transmission unit includes a horizontal angle $\theta$, a pitch angle $\varphi$; a space angle coordinate range of the detection region is $(-0.5n*\theta$ to $0.5n*\theta, -0.5m*\varphi$ to $0.5m*\varphi)$. A space angle coordinate range of each of the sub-regions is $[a*\theta$ to $(a+1)*\theta, (b+1)*\varphi$ to $b*\varphi]$, where $-0.5n \leq a \leq 0.5n-1, -m/2 \leq b \leq 0.5m-1$.

Both m and n may be integers greater than 1. In this embodiment, m is preferably 4, $n$ is preferably 4. In this way, sixteen sub-regions are respectively represented by Z1-Z16. A space angle coordinate range of the detection region is $(-2\theta$ to $2\theta, -2\varphi$ to $2\varphi)$. Space angle coordinates of all sub-regions are allocated as follows:

$$Z1\ (-2\theta \text{ to } -\theta, 2\varphi \text{ to } \varphi); \quad Z2\ (-\theta \text{ to } 0, 2\varphi \text{ to } \varphi);$$

$$Z3\ (0 \text{ to } \theta, 2\varphi \text{ to } \varphi); \quad Z4\ (\theta \text{ to } 2\theta, 2\varphi \text{ to } \varphi);$$

$$Z5\ (-2\theta \text{ to } -\theta, \varphi \text{ to } 0); \quad Z6\ (-\theta \text{ to } 0, \varphi \text{ to } 0);$$

$$Z7\ (0 \text{ to } \theta, \varphi \text{ to } 0); \quad Z8\ (\theta \text{ to } 2\theta, \varphi \text{ to } 0);$$

$$Z9\ (-2\theta \text{ to } -\theta, 0 \text{ to } -\varphi); \quad Z10\ (-\theta \text{ to } 0, 0 \text{ to } -\varphi);$$

$$Z11\ (0 \text{ to } \theta, 0 \text{ to } -\varphi); \quad Z12\ (\theta \text{ to } 2\theta, 0 \text{ to } -\varphi);$$

$$Z13\ (-2\theta \text{ to } -\theta, -\varphi \text{ to } -2\varphi); \quad Z14\ (-\theta \text{ to } 0, -\varphi \text{ to } -2\varphi);$$

$$Z15\ (0 \text{ to } \theta, -\varphi \text{ to } -2\varphi); \quad Z16\ (\theta \text{ to } 2\theta, -\varphi \text{ to } -2\varphi).$$

In step S1, the transmission unit is an antenna array including multiple transmission antennas, wherein relationships between electrical signal phases of the transmission antennas are controlled to change a beam angle of the transmission unit, so the transmission unit scans the sub-regions one by one. Designated phase combinations are set, so beams of the antenna array are divided according to corresponding detection regions, and then all sub-regions are scanned one by one. It should be noted that how to change a beam angle of the transmission unit by controlling relationships between electrical signal phases of the transmission antennas is a widely known technical means for those skilled in the art. This technical means also has many applications in radar detection and other technical fields.

The transmission antennas are arranged in multiple rows and multiple columns, so a control accuracy of the beam angle of the transmission unit may be improved.

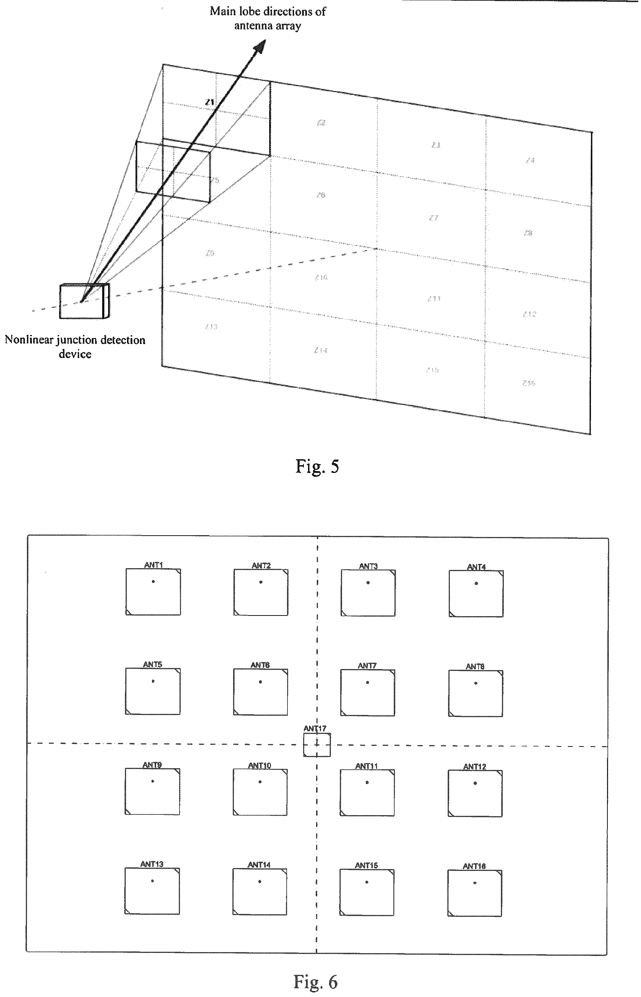

In this embodiment, arrangement of the antenna array is shown in Fig. 6, an antenna array with 4×4 antennas is used, the antennas being fixed to a same plane, where ANT1-ANT16 represent transmission antennas, distances between two adjacent antennas are equal in both horizontal and vertical dimensions, the transmission antennas operate at a fundamental frequency; ANT17 represents a reception unit which operates at a harmonic frequency, and a beam angle of the reception unit covers the whole detection region.

As shown in Fig. 5, a main lobe direction when the transmission unit scans each of the sub-regions directs to a center point of each of the sub-regions.

In this embodiment, main lobe directions when the transmission unit scans all the sub-regions are as follows:

Z1, main lobe direction $(-1.5\theta, 1.5\varphi)$; Z2, main lobe direction $(-0.5\theta, 1.5\varphi)$;
Z3, main lobe direction $(0.5\theta, 1.5\varphi)$; Z4, main lobe direction $(1.5\theta, 1.5\varphi)$;
Z5, main lobe direction $(-1.5\theta, 0.5\varphi)$; Z6, main lobe direction $(-0.5\theta, 0.5\varphi)$;
Z7, main lobe direction $(0.5\theta, 0.5\varphi)$; Z8, main lobe direction $(1.5\theta, 0.5\varphi)$;
Z9, main lobe direction $(-1.5\theta, -0.5\varphi)$; Z10, main lobe direction $(-0.5\theta, -0.5\varphi)$;
Z11, main lobe direction $(0.5\theta, -0.5\varphi)$; Z12, main lobe direction $(1.5\theta, -0.5\varphi)$;
Z13, main lobe direction $(-1.5\theta, -1.5\varphi)$; Z14, main lobe direction $(-0.5\theta, -1.5\varphi)$;
Z15, main lobe direction $(-0.5\theta, -1.5\varphi)$; Z16, main lobe direction $(1.5\theta, -1.5\varphi)$;

The antenna array with $4\times4$ antennas may accurately control a direction of the beam angle, accurately scan each sub-region, and improve detection accuracy.

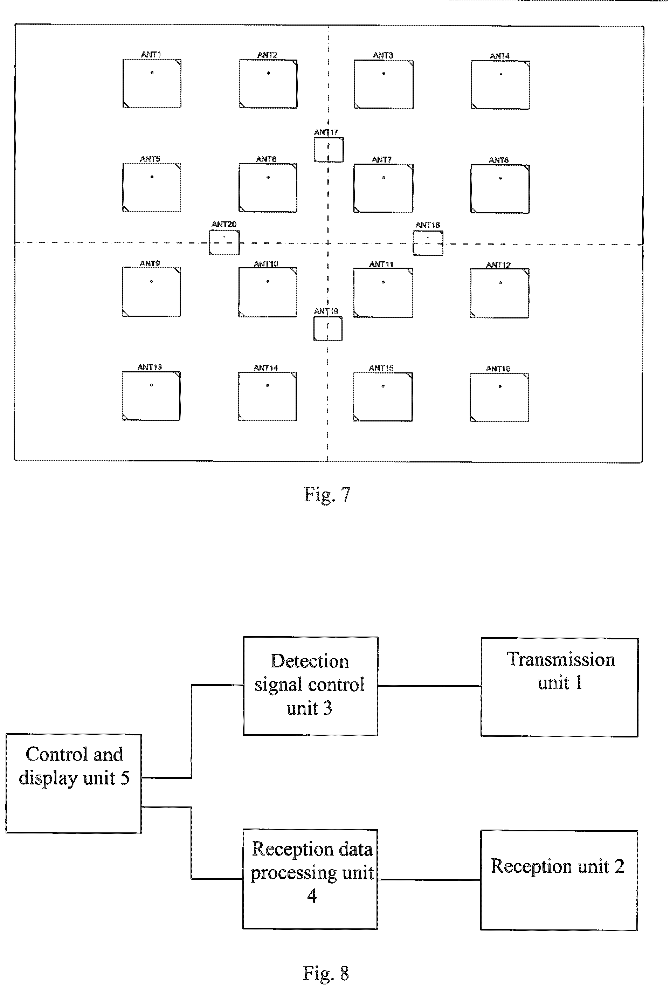

In this embodiment, as shown in Fig. 7, the reception unit may include multiple reception antennas, ANT17-ANT20 represent reception antennas which operate at a harmonic frequency, and beam angles of the reception antennas cover the whole detection region. The reception antennas are arranged in a cross vertically and horizontally. An incident direction of a harmonic signal may be tested by a phase method (this method is stated in the invention with an application No. 202010694283X, and is not repeated here because of not belonging to the protection range required by the present invention).

Further, this embodiment further comprises step S3: setting the sub-region in which the nonlinear junction is located as a new detection region, and repeating steps S1 and S2, until a precise position of the nonlinear junction is found. In this way, detection accuracy and speed of the nonlinear junction may be further improved.

The specific method steps of this embodiment are as follows:

first, dividing a detection region into $4\times4$ sub-regions; setting designated phase combinations, so beams of an antenna array are divided according to corresponding detection regions, and then transmitting, by all transmission antennas of a transmission unit, detection signals to all the sub-regions one by one to conduct scanning detection; then, receiving, by a reception unit, signals fed back from the sub-regions, obtaining amplitude of harmonic components measured from all the sub-regions according to the signals fed back; if a harmonic component of a certain sub-region exceeds a preset value, determining that a nonlinear junction is present in the sub-region; further reducing the detection region, setting the sub-region in which the nonlinear junction is located as a new detection region, and repeating steps S1 and S2, until a precise position of the nonlinear junction is found.

Embodiment 2:

Embodiment 2 of the present invention provides a scanning nonlinear junction detection device, using the scanning nonlinear junction detection method provided in embodiment 1, as shown in Fig. 8, comprising:

a transmission unit 1 used to transmit signals to all sub-regions of a detection region;
a reception unit 2 used to receive the signals fed back from the sub-regions;
a detection signal control unit 3 used to control detection signals from the transmission unit 1;
a reception data processing unit 4 used to obtain amplitude of harmonic components measured from the sub-regions according to the signals fed back; and
a control and display unit 5 used to control and display operating conditions and results of the detection signal control unit and the reception data processing unit 4.

By means of the above structure, the detection signal control unit controls the transmission unit 1 to transmit detection signals to all the sub-regions of the detection region, the reception unit 2 receives the signals fed back from the sub-regions and transmits same to the reception data processing unit 4, the reception data processing unit 4 obtains amplitude of harmonic components measured from the sub-regions according to the signals fed back; the control and display unit 5 controls and displays operating conditions and results of the detection signal control unit 3 and the reception data processing unit 4, so if a harmonic component of a certain sub-region exceeds a preset value, it is determined that a nonlinear junction is present in the sub-region. In this way, a positions and region in which the nonlinear junction is located are quickly found, and speed and efficiency of searching for the nonlinear junction are improved.

In this embodiment, the transmission unit 1 comprises multiple transmission antennas which are arranged in multiple rows and multiple columns, preferably, four rows and four columns.

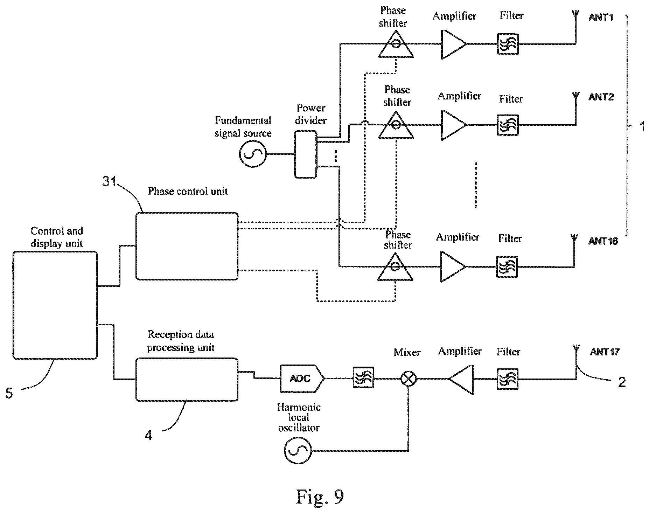

If the reception unit 2 includes a single reception antenna, as shown in Fig. 9, the detection signal control unit 3 comprises a phase control unit 31 used to control transmission signal phases, ANT1-ANT16 represent the transmission antennas, and ANT17 represents the reception antenna. Detection signals are generated by a fundamental signal source, equally divided into 16 paths of signals by a power divider, and transmitted by the transmission antennas after passing through phase shifters, amplifiers and filters. When a transmission signal circuit is designed, it is guaranteed that electrical lengths of various signal pathways are equal, gains are equal, and a phase adjustment range of the phase shifters is 0-360d°.

A reception signal circuit adopts a universal superheterodyne receiver scheme. A harmonic signal received by the reception antenna is converted into an intermediate-frequency signal after passing through a filter, an amplifier and a mixer, digitalized by ADC, and then calculated by the reception data processing unit 4. The superheterodyne receiver scheme is a method for converting an input signal frequency into a certain predetermined frequency by mixing a locally generated oscillation wave with an input signal. The problems of weak output signals and poor stability of an original high-frequency amplifying receiver are effectively solved. Moreover, an output signal has high selectivity and good frequency characteristics and is easy to adjust.

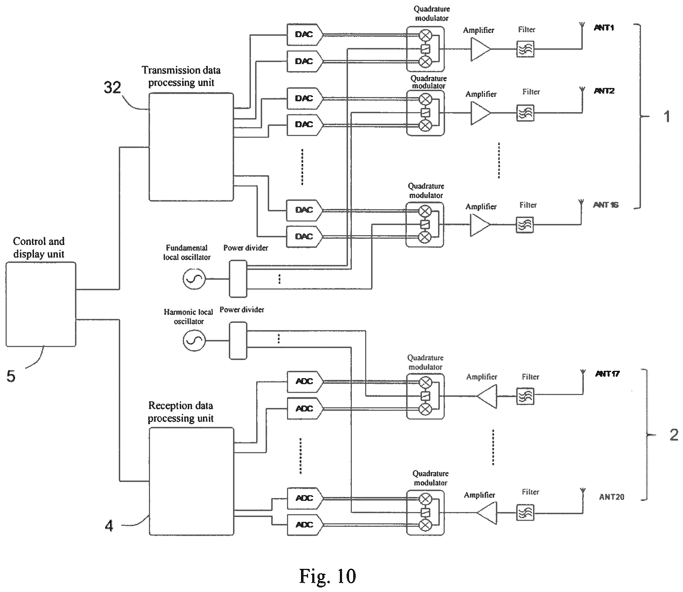

If the reception unit 2 includes multiple reception antennas, for example, four reception antennas, as shown in Fig. 10, the detection signal control unit 3 comprises a transmission data processing unit 32 used to process transmission signals, ANT1-ANT16 represent the transmission antennas, and ANT17-ANT20 represent the reception antennas; The transmission signals are generated from fundamental local oscillator and intermediate-frequency signals through orthogonal modulation. The local oscillator signals come from the fundamental local oscillator and are equally divided by the power dividers, and the intermediate-frequency signals come from $16 \times 2$ paths of DAC. Clocks of all the DAC are homologous. The intermediate-frequency signals generated by the DAC are identical in frequency, but are different in phase. Phases are output according to presetting. RF links are transmitted by the transmission antennas after passing through quadrature modulators, amplifiers and filters. When a circuit is designed, it is guaranteed that electrical lengths of various signal pathways are equal, gains are equal.

A reception circuit adopts a complex intermediate-frequency receiver scheme. Harmonic signal received by the reception antennas are converted into intermediate-frequency signals after passing through the filters, the amplifiers and the mixer, digitalized by ADC, and then calculated by the reception data processing unit 4. Four paths of signals may be received simultaneously. Arrival angles of harmonic signals may be calculated according to different phases (this algorithm is stated in the invention with an application No. 202010694283.X, and is not repeated here because of not belonging to the protection range required by the present invention).

It should be noted that both the superheterodyne receiver scheme and the complex intermediate-frequency receiver scheme are conventional technical means in the art, and implementation methods thereof are widely known by those skilled in the art.

The above is just one concrete embodiment of the present invention, but the protection scope of the present invention is not limited thereto. The invention is defined in the appended claims.

## Claims

1.  A scanning nonlinear junction detection method, used to detect electronic apparatus containing nonlinear junctions, comprising following steps:

    S1. dividing a detection region into multiple sub-regions, transmitting, by a transmission unit comprising an antenna array, signals to all the sub-regions one by one;
    S2. receiving, by a reception unit, signals fed back from the sub-regions, obtaining amplitude of harmonic components measured from all the sub-regions according to the signals fed back; if one of the harmonic components of a certain sub-region exceeds a preset value, determining that a nonlinear junction is present in the sub-region;
    S3: setting the sub-region in which the nonlinear junction is located as a new detection region, and repeating steps S1 and S2, until a precise position of the nonlinear junction is found.

2.  The scanning nonlinear junction detection method according to claim 1, **characterized in that** in step S1, the sub-regions are arranged in *m* rows and *n* columns, where *m*>1, *n*>1.

3.  The scanning nonlinear junction detection method according to claim 2, **characterized in that** an effective space angle of the transmission unit includes a horizontal angle $\theta$, a pitch angle $\varphi$; a space angle coordinate range of the detection region is (-0.5$n*\theta$ to 0.5$n*\theta$, -0.5$m*\varphi$ to 0.5$m*\varphi$).

4.  The scanning nonlinear junction detection method according to claim 3, **characterized in that** a space angle coordinate range of each of the sub-regions is [$a*\theta$ to ($a+1$)*$\theta$, ($b+1$)*$\varphi$ to $b*\varphi$], where -0.5$n \leq a \leq$ 0.5$n$-1, -$m$/2$\leq b \leq$ 0.5$m$-1.

5.  The scanning nonlinear junction detection method according to any one of claims 1-4, **characterized in that** in step S1, the transmission unit is an antenna array including multiple transmission antennas, wherein relationships between electrical signal phases of the transmission antennas are controlled to change a beam angle of the transmission unit, so the transmission unit scans the sub-regions one by one.

6.  The scanning nonlinear junction detection method according to claim 5, **characterized in that** the transmission antennas are arranged in multiple rows and multiple columns.

7.  The scanning nonlinear junction detection method according to claim 6, **characterized in that** a main lobe direction when the transmission unit scans each of the sub-regions directs to a center point of each of the sub-regions.

8.  A scanning nonlinear junction detection device, comprising: a transmission unit (1) comprising an antenna array and configured to transmit detection signals to all sub-regions of a detection region, a reception unit (2) configured to receive signals fed back from the sub-regions, a detection signal control unit (3) configured to control detection signals from the transmission unit (1), a reception data processing unit (4) configured to obtain amplitude of harmonic components obtained from the sub-regions according to the signals fed back, and a control and display unit (5) configured to control and display operating conditions and results of the detection signal control unit (3) and the reception data processing unit (5), wherein the scanning nonlinear junction detection device is configured to performed the method of one of claims 1-7.

9.  The scanning nonlinear junction detection device according to claim 8, **characterized in that** the transmission unit (1) comprises multiple transmission antennas which are arranged in multiple rows and multiple columns.

**Patentansprüche**

1.  Erfassungsverfahren, das einen nichtlinearen Übergang scannt, das zur Erfassung von elektronischen Geräten verwendet wird, die nichtlineare Übergänge enthalten, umfassend die folgenden Schritte:

    S1. Unterteilen eines Erfassungsbereichs in mehrere Unterbereiche, Übertragen von Signalen an alle Unterbereiche nacheinander durch eine Übertragungseinheit, umfassend eine Antennenanordnung;
    S2. Empfangen von Signalen, die von den Unterbereichen zurückgeführt werden, durch eine Empfangseinheit, erhaltend eine Amplitude von harmonischen Komponenten, die von all den Unterbereichen gemäß den zurückgeführten Signalen gemessen werden; wenn eine der harmonischen Komponenten eines bestimmten Unterbereichs einen voreingestellten Wert überschreitet, Bestimmen, dass ein nichtlinearer Übergang in dem Unterbereich vorhanden ist;
    S3: Festlegen der Unterregion, in der sich der nichtlineare Übergang befindet, als eine neue Erfassungsregion und Wiederholen der Schritte S1 und S2, bis eine genaue Position des nichtlinearen Übergangs gefunden wird.

2.  Erfassungsverfahren, das einen nichtlinearen Übergang scannt, nach Anspruch 1, **dadurch gekennzeichnet, dass** in Schritt S1 die Unterregionen in m Zeilen und n Spalten angeordnet sind, wobei m>1, n>1.

3.  Erfassungsverfahren, das einen nichtlinearen Übergang scannt, nach Anspruch 2, **dadurch gekennzeichnet, dass** ein effektiver Raumwinkel der Übertragungseinheit einen Horizontalwinkel $\theta$, einen Neigungswinkel $\varphi$ enthält; ein Raumwinkel-Koordinatenbereich des Erfassungsbereichs (-0,5$n*\theta$ bis 0,5$n*\theta$, -0,5 $m*\varphi$ bis 0,5$m*\varphi$) ist.

4.  Erfassungsverfahren, das einen nichtlinearen Übergang scannt, nach Anspruch 3, **dadurch gekennzeichnet, dass** ein Raumwinkel-Koordinatenbereich von jedem der Unterbereiche [$a*\theta$ bis ($a+1$)*$\theta$, ($b+1$)*$\varphi$ bis $b*\varphi$] ist, wobei -0,5$n \leq a \leq$ 0,5$n$-1, -$m$/2$\leq b \leq$ 0,5$m$-1 ist.

5.  Erfassungsverfahren, das einen nichtlinearen Übergang scannt, nach einem der Ansprüche 1-4, **dadurch ge-**

**kennzeichnet, dass** in Schritt S1 die Übertragungseinheit eine Antennenanordnung ist, die mehrere Übertragungsantennen enthält, wobei die Beziehungen zwischen elektrischen Signalphasen der Übertragungsantennen so gesteuert werden, dass sich ein Strahlwinkel der Übertragungseinheit ändert, sodass die Übertragungseinheit die Unterbereiche nacheinander scannt.

6. Erfassungsverfahren, das einen nichtlinearen Übergang scannt, nach Anspruch 5, **dadurch gekennzeichnet, dass** die Übertragungsantennen in mehreren Reihen und mehreren Spalten angeordnet sind.

7. Erfassungsverfahren, das einen nichtlinearen Übergang scannt, nach Anspruch 6, **dadurch gekennzeichnet, dass** eine Hauptkeulenrichtung, wenn die Sendeeinheit jeden der Teilbereiche scannt, auf einen Mittelpunkt jedes der Teilbereiche gerichtet ist.

8. Erfassungsvorrichtung, die einen nichtlinearen Übergang scannt, umfassend:

   eine Übertragungseinheit (1), umfassend eine Antennenanordnung und so konfiguriert, dass sie Erfassungssignale an alle Unterbereiche eines Erfassungsbereichs überträgt,
   eine Empfangseinheit (2), die so konfiguriert ist, dass sie von den Unterbereichen zurückgeführte Signale empfängt,
   eine Erfassungssignal-Steuereinheit (3), die so konfiguriert ist, dass sie Erfassungssignale von der Übertragungseinheit (1) steuert,
   eine Empfangsdaten-Verarbeitungseinheit (4), die so konfiguriert ist, dass sie Amplitude von harmonischen Komponenten erhält, die von den Unterbereichen gemäß den zurückgeführten Signalen erhalten werden, und
   eine Steuer- und Anzeigeeinheit (5), die so konfiguriert ist, dass sie Betriebsbedingungen und Ergebnisse der Erfassungssignal-Steuereinheit (3) und der Empfangsdaten-Verarbeitungseinheit (4) steuert und anzeigt, wobei die Erfassungsvorrichtung, die einen nichtlinearen Übergang scannt, so konfiguriert ist, dass sie das Verfahren nach einem der Ansprüche 1-7 ausführt.

9. Erfassungsvorrichtung, die einen nichtlinearen Übergang scannt, nach Anspruch 8, **dadurch gekennzeichnet, dass** die Übertragungseinheit (1) mehrere Übertragungsantennen umfasst, die in mehreren Reihen und mehreren Spalten angeordnet sind.

## Revendications

1. Un procédé de détection de jonction non-linéaire par balayage, utilisé pour détecter des appareils électroniques contenant des jonctions non-linéaires, comprenant les étapes suivantes :

   S1. diviser une zone de détection en plusieurs sous-zones, transmettant, par une unité de transmission comprenant un réseau d'antennes, des signaux à toutes les sous-zones une par une ;
   S2. recevoir, par une unité de réception, des signaux renvoyés par les sous-zones, obtenant l'amplitude des composantes harmoniques mesurées à partir de toutes les sous-zones en fonction des signaux renvoyés ; si l'une des composantes harmoniques d'une certaine sous-zone dépasse une valeur prédéfinie, déterminer qu'une jonction non-linéaire est présente dans la sous-zone ;
   S3. définir la sous-zone dans laquelle se trouve la jonction non-linéaire comme étant une nouvelle zone de détection, et répéter les étapes S1 et S2, jusqu'à ce qu'une position précise de la jonction non-linéaire soit trouvée.

2. Le procédé de détection de jonction non-linéaire par balayage selon la revendication 1, **caractérisé en ce qu'**à l'étape S1, les sous-zones sont agencées en $m$ rangées et $n$ colonnes, dans lequel $m>1$, $n>1$.

3. Le procédé de détection de jonction non-linéaire par balayage selon la revendication 2, **caractérisé en ce qu'**un angle spatial effectif de l'unité de transmission comprend un angle horizontal $\theta$, un angle de pas $\varphi$ ; une gamme de coordonnées d'angle spatial de la zone de détection est $(-0,5n*\theta$ à $0,5n*\theta, -0,5m*\varphi$ à $0,5m*\varphi)$.

4. Le procédé de détection de jonction non-linéaire par balayage selon la revendication 3, **caractérisé en ce qu'**une gamme de coordonnées d'angle spatial de chacune des sous-zones est $[a*\theta$ à $(a+1)*\theta, (b+1)*\varphi$ à $b*\varphi]$, dans lequel $-0,5n \le a \le 0,5n$-1, $-m/2 \le b \le 0,5m$-1.

**5.** Le procédé de détection de jonction non-linéaire par balayage selon l'une quelconque des revendications 1 à 4, **caractérisé en ce qu'**à l'étape S1, l'unité de transmission est un réseau d'antennes comprenant une pluralité d'antennes de transmission, les relations entre les phases de signaux électriques des antennes de transmission étant commandées de façon à modifier un angle de faisceau de l'unité de transmission, de sorte que l'unité de transmission balaye les sous-zones une par une.

**6.** Le procédé de détection de jonction non-linéaire par balayage selon la revendication 5, **caractérisé en ce que** les antennes de transmission sont agencées en plusieurs rangées et plusieurs colonnes.

**7.** Le procédé de détection de jonction non-linéaire par balayage selon la revendication 6, **caractérisé en ce qu'**une direction de lobe principal lorsque l'unité de transmission balaye chacune des sous-zones est dirigée vers un point central de chacune des sous-zones.

**8.** Un dispositif de détection de jonction non-linéaire à balayage, comprenant une unité de transmission (1) comprenant un réseau d'antennes, configurée pour transmettre des signaux de détection à toutes les sous-zones d'une zone de détection, une unité de réception (2), configurée pour recevoir des signaux renvoyés par les sous-zones configurées, une unité (3) de commande de signal de détection, configurée pour commander des signaux de détection provenant de l'unité de transmission (1), une unité (4) de traitement de données de réception, configurée pour obtenir l'amplitude des composantes harmoniques obtenues à partir des sous-zones en fonction des signaux renvoyés, et une unité (5) de commande et d'affichage, configurée pour commander et afficher les conditions de fonctionnement et les résultats de l'unité (3) de commande de signal de détection et de l'unité de traitement de données de réception (4), le dispositif de détection de jonction non-linéaire à balayage étant configuré pour mettre en œuvre le procédé selon l'une des revendications 1 à 7.

**9.** Le dispositif de détection de jonction non-linéaire à balayage selon la revendication 8, **caractérisé en ce que** l'unité de transmission (1) comprend plusieurs antennes de transmission qui sont agencées en plusieurs rangées et plusieurs colonnes.

Fig. 1

Fig. 2

Detection region

Fig. 3

Detection region

Fig. 4

Main lobe directions of
antenna array

Nonlinear junction detection
device

Fig. 5

ANT1    ANT2    ANT3    ANT4

ANT5    ANT6    ANT7    ANT8

ANT17

ANT9    ANT10    ANT11    ANT12

ANT13    ANT14    ANT15    ANT16

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018128962 A1
- GB 2344423 A
- US 20180356506 A1
- CA 3071582 A1
- CN 106778549 A1
- WO 202010694283X A